# EUROPEAN PATENT APPLICATION

(11) **EP 4 421 146 A1**
(43) Date of publication of application: **28.08.2024**
(21) Application number: 22883245.7
(22) Date of filing: 08.09.2022
(51) Int. Cl.: C09K 5/04, F25B 1/00

(54) **REFRIGERANT COMPOSITION, WORKING MEDIUM FOR REFRIGERATION CYCLE, AND REFRIGERATION CYCLE SYSTEM**

(30) Priority: 19.10.2021 JP 2021170646
(71) Applicant: Panasonic Intellectual Property Management Co., Ltd., Kadoma-shi, Osaka 571-0057 (JP)
(72) Inventor: IITAKA, Seishi, Kadoma-shi Osaka 571-0057 (JP); HIWATA, Akira, Kadoma-shi Osaka 571-0057 (JP)
(74) Representative: Eisenführ Speiser
(86) International application number: PCT/JP2022/033699
(87) International publication number: WO 2023/067934

(57) **Abstract**

A refrigerant composition includes trifluoroethylene (HFO-1123), difluoromethane (R32), and propane (R290). When mass percentages of the trifluoroethylene, the difluoromethane, and the propane based on a sum of the trifluoroethylene, the difluoromethane, and the propane are respectively represented by x, y, and z, in a ternary composition diagram in which the sum of the trifluoroethylene, the difluoromethane, and the propane is 100 mass %, there are a point A (100.0, 0.0, 0.0), a point B (0.0, 100.0, 0.0), a point C (0.0, 0.0, 100.0), a point D (74.5, 0.0, 25.5), a point E (62.0, 12.4, 25.6), a point F (91.2, 0.0, 8.8), a point G (86.9, 3.1, 10.0), and a point H (0.0, 90.0, 10.0), and a point of coordinates (x, y, z) is within a range of a figure surrounded by a line segment GH connecting the points G and H, a line segment HC connecting the points H and C, a line segment CD connecting the points C and D, a line segment DE connecting the points D and E, and a line segment EG connecting the points E and G or is on at least one of the line segments DE, EG, and GH (except for the points D, E, and G). The line segment DE is represented by coordinates (x, 0.0266x²-4.6248x+196.8859, -0.0266x²+3.6248x-96.8859). A line segment EF connecting the points E and F is represented by coordinates (0.1171z²-5.7627z+132.8115, -0.1171z²+4.7627z-32.8115, z). The line segments GH, HC, and CD are straight lines.

## Description

### Technical Field

The present disclosure relates to a refrigerant composition including trifluoroethylene, a refrigeration cycle working medium including the refrigerant composition, and a refrigeration cycle system.

### Background Art

As a refrigerant composition used in a refrigeration cycle working medium, R410A (refrigerant number based on Standard 34 (2016) of American Society of Heating, Refrigerating and Air-Conditioning Engineers (ASHRAE)) including difluoromethane (R32) and pentafluoroethane (R125) is known. R410A has a relatively high GWP (Global Warming Potential; The value of the GWP used in the present disclosure denotes a global warming potential based on the values in Fourth Assessment Report of Intergovernmental Panel on Climate Change (IPCC)). Therefore, as disclosed in PTL 1, a refrigerant composition which includes difluoroethylene (HFO-1132(E)), trifluoroethylene (HFO-1123), and difluoromethane (R32) and has a relatively low GWP is also known as a substitute for R410A.

### Citation List

### Patent Literature

PTL 1: International Publication No. 2019/124402

### Summary of Invention

### Technical Problem

For example, the refrigerant composition is required to have a low GWP and a high COP (Coefficient Of Performance; also called energy consumption efficiency). The GWP of the refrigerant composition disclosed in PTL 1 is lower than that of R410A, but the COP thereof is not so high.

An object of the present disclosure is to obtain a refrigerant composition which includes trifluoroethylene (HFO-1123) and difluoromethane (R32) and is lower in the GWP than R410A but is adequately high in the COP.

### Solution to Problem

It was confirmed by the studies of the present inventors that a refrigerant composition (a refrigerant or a heat medium) which includes trifluoroethylene (HFO-1123), difluoromethane (R32), and propane (R290) and in which mass percentages of the trifluoroethylene (HFO-1123), the difluoromethane (R32), and the propane (R290) are strictly set is lower in the GWP than R410A but is high in the COP. The present disclosure is based on this finding.

To be specific, one aspect of the present disclosure is a refrigerant composition and includes trifluoroethylene (HFO-1123), difluoromethane (R32), and propane (R290). When mass percentages of the trifluoroethylene, the difluoromethane, and the propane based on a sum of the trifluoroethylene, the difluoromethane, and the propane are respectively represented by x, y, and z, in a ternary composition diagram in which the sum of the trifluoroethylene, the difluoromethane, and the propane is 100 mass %, there are a point A (100.0, 0.0, 0.0), a point B (0.0, 100.0, 0.0), a point C (0.0, 0.0, 100.0), a point D (74.5, 0.0, 25.5), a point E (62.0, 12.4, 25.6), a point F (91.2, 0.0, 8.8), a point G (86.9, 3.1, 10.0), and a point H (0.0, 90.0, 10.0), and a point of coordinates (x, y, z) is within a range of a figure surrounded by a line segment GH connecting the points G and H, a line segment HC connecting the points H and C, a line segment CD connecting the points C and D, a line segment DE connecting the points D and E, and a line segment EG connecting the points E and G or is on at least one of the line segments DE, EG, and GH (except for the points D, E, and G). The line segment DE is represented by coordinates (x, 0.0266x²-4.6248x+196.8859, -0.0266x²+3.6248x-96.8859). A line segment EF connecting the points E and F is represented by coordinates (0.1171z²-5.7627z+132.8115, -0.1171z²+4.7627z-32.8115, z). The line segments GH, HC, and CD are straight lines.

The refrigerant composition may further include halomethane. Moreover, when the sum of the trifluoroethylene, the difluoromethane, and the propane is 100 mass %, a mass percentage of the difluoromethane may be less than 44.4 mass %. Furthermore, the mass percentage of the difluoromethane may be less than 29.6 mass %. Moreover, the mass percentage of the difluoromethane may be less than 22.2 mass %.

### Advantageous Effects of Invention

According to the aspects of the present disclosure, the refrigerant composition which includes trifluoroethylene (HFO-1123) and difluoromethane (R32) and is lower in the GWP than R410A but is adequately high in the COP is obtained.

### Brief Description of Drawings

FIG. 1 is a ternary composition diagram of a refrigerant composition according to Embodiment 1.
FIG. 2 is a ternary composition diagram showing a region T of the refrigerant composition according to Embodiment 1.
FIG. 3 is a ternary composition diagram showing a region U of the refrigerant composition according to Embodiment 1.
FIG. 4 is a ternary composition diagram showing a region V of the refrigerant composition according to Embodiment 1.
FIG. 5 is a block diagram of a refrigeration cycle system according to Embodiment 1.
FIG. 6 is a block diagram of the refrigeration cycle system according to Embodiment 2.

### Description of Embodiments

A refrigerant composition according to the present disclosure includes trifluoroethylene (HFO-1123), difluoromethane (R32), and propane (R290). When mass percentages of the trifluoroethylene, the difluoromethane, and the propane based on a sum of the trifluoroethylene, the difluoromethane, and the propane are respectively represented by x, y, and z, in a ternary composition diagram in which the sum of the trifluoroethylene, the difluoromethane, and the propane is 100 mass %, there are a point A (100.0, 0.0, 0.0), a point B (0.0, 100.0, 0.0), a point C (0.0, 0.0, 100.0), a point D (74.5, 0.0, 25.5), a point E (62.0, 12.4, 25.6), a point F (91.2, 0.0, 8.8), a point G (86.9, 3.1, 10.0), and a point H (0.0, 90.0, 10.0), and a point of coordinates (x, y, z) is within a range of a figure surrounded by a line segment GH connecting the points G and H, a line segment HC connecting the points H and C, a line segment CD connecting the points C and D, a line segment DE connecting the points D and E, and a line segment EG connecting the points E and G or is on at least one of the line segments DE, EG, and GH (except for the points D, E, and G). The line segment DE is represented by coordinates (x, 0.0266x²-4.6248x+196.8859, -0.0266x²+3.6248x-96.8859). A line segment EF connecting the points E and F is represented by coordinates (0.1171z²-5.7627z+132.8115, -0.1171z²+4.7627z-32.8115, z). The line segments GH, HC, and CD are straight lines. Hereinafter, a region in the ternary composition diagram of the refrigerant composition which is defined as above may be simply called a "constitution region."

According to the above configuration, a refrigerant composition which has the COP similar to that of R410A and is lower in the GWP than R410A is obtained when the refrigerant composition includes trifluoroethylene (HFO-1123), difluoromethane (R32), and propane (R290) such that the constitution of the refrigerant composition is within the above range. Moreover, this refrigerant composition includes 10% or more of R290 that is a natural refrigerant. Therefore, a fluorocarbon chemical substance included in the refrigerant composition can be reduced by 10 mass % or more. Thus, the influence of the fluorocarbon chemical substance of the refrigerant composition on the global environment can be reduced.

The refrigerant composition may further include halomethane. Thus, the characteristics of the refrigerant composition can be adjusted by halomethane. Moreover, when the sum of the trifluoroethylene, the difluoromethane, and the propane is 100 mass %, the mass percentage of the difluoromethane may be less than 44.4 mass % as one example as long as the constitution of the refrigerant composition is within the constitution region. Thus, the GWP of the refrigerant composition can be suppressed to a value of less than 300.

The mass percentage of the difluoromethane may be less than 29.6 mass %. Thus, the GWP of the refrigerant composition can be suppressed to a value of less than 200. Moreover, the mass percentage of the difluoromethane may be less than, 22.2 mass %. Thus, the GWP of the refrigerant composition can be suppressed to a value of less than 150.

Moreover, the present disclosure relates to a refrigeration cycle working medium including the above refrigerant composition. Thus, the refrigerant cycle working medium which has the COP similar to that of R410A and is lower in the GWP than R410A is obtained. Therefore, for example, in a process in which the refrigerant cycle working medium circulates in a working medium passage in a refrigeration cycle system, the working medium performs work by energy given from an outside and can efficiently takes ambient heat.

Moreover, the present disclosure relates to a refrigeration cycle system including the refrigeration cycle working medium. Thus, the refrigeration cycle system that can efficiently freeze a target object while suppressing the influence on global warming can be realized.

Hereinafter, embodiments will be described with reference to the drawings.

### Embodiment 1

### Refrigeration Cycle Working Medium

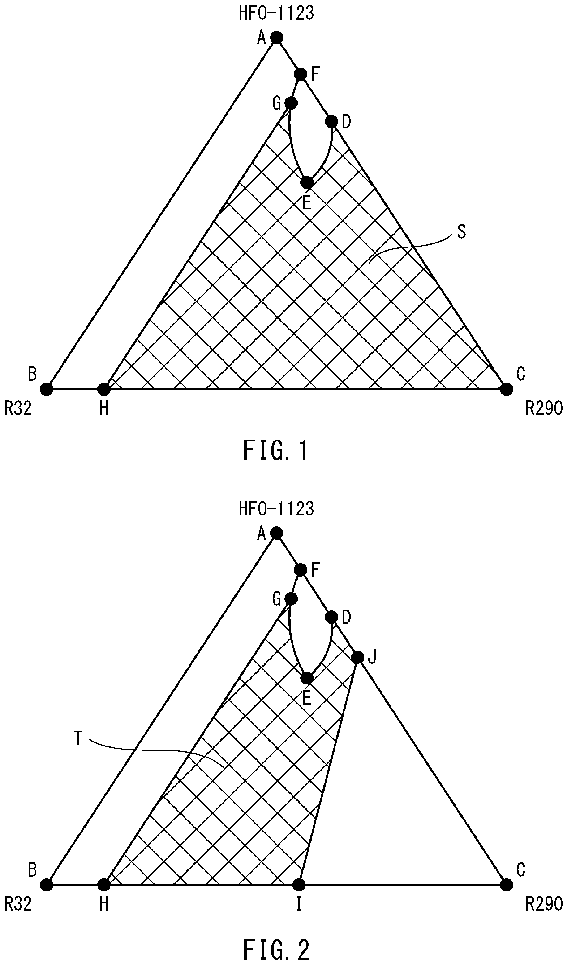

A refrigeration cycle working medium according to Embodiment 1 includes a refrigerant composition and another component that can be used together with this refrigerant composition. FIG. 1 is a ternary composition diagram of the refrigerant composition according to Embodiment 1. The refrigerant composition includes trifluoroethylene (HFO-1123), difluoromethane (R32), and propane (R290). The mass percentages of the trifluoroethylene (HFO-1123), the difluoromethane (R32), and the propane (R290) are defined by the constitution region shown as a region S in FIG. 1. Since the refrigerant composition includes the trifluoroethylene (HFO-1123), the refrigerant composition can have a low GWP and a high COP. Moreover, since the refrigerant composition includes the difluoromethane (R32), the refrigerant composition can have a further low GWP and can be easily adjusted to have mild flammability. The term "mild flammability" described herein denotes, for example, flammability that satisfies some or all of indices used when a refrigerant composition is determined as "A2L" in accordance with Standard 34 (2016) of American Society of Heating, Refrigerating and Air-Conditioning Engineers (ASHRAE).

Moreover, the refrigerant composition includes the propane (R290) in addition to the trifluoroethylene (HFO-1123) and the difluoromethane (R32), and the mass percentages of these three components are strictly set so as to be defined by the constitution region. Therefore, the refrigerant composition has performance that is lower in the GWP than R410A but is adequately high in the COP. For example, when a refrigerant composition including only the trifluoroethylene (HFO-1123) is used in an air conditioner, the COP of the refrigerant composition is about 90% of the COP of R410A. On the other hand, since the refrigerant composition of the present embodiment has the constitution defined by the constitution region, the COP of the refrigerant composition of the present embodiment is improved to 92.5% or more of the COP of R410A. As above, the refrigerant composition of the present embodiment has excellent performance regarding both of the COP and the GWP.

FIG. 2 is a ternary composition diagram showing a region T of the refrigerant composition according to Embodiment 1. As shown in FIG. 2, as another example, a more desirable region in the above constitution region is the region T located at the point H side when the region S is divided into two regions by a line segment IJ connecting a point I (0.0, 47.0, 53.0) and a point J (65.0, 0.0, 35.0). For example, in the region T, a percentage of a volumetric capacity (capacity per suction volume) of the refrigerant composition of the present embodiment relative to R410 can be set to 100%.

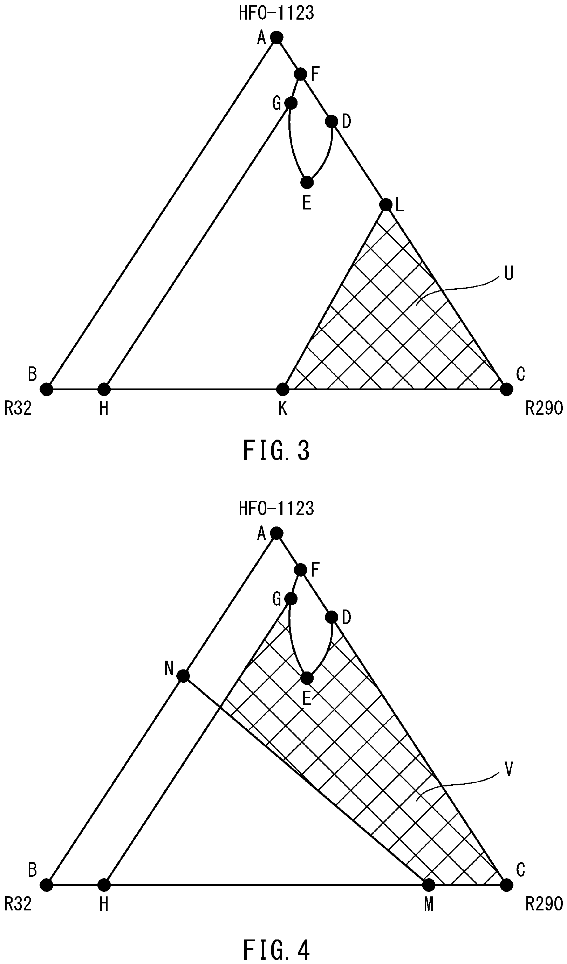

FIG. 3 is a ternary composition diagram showing a region U of the refrigerant composition according to Embodiment 1. As shown in FIG. 3, as another example, a more desirable region in the above constitution region is the region U located at the point C side when the region S is divided into two regions by a line segment KL connecting a point K (0.0, 50.0, 50.0) and a point L (50.0, 0.0, 50.0). For example, in the region U, the solubility of the refrigerant composition of the present embodiment in freezer oil (ether oil, ester oil, etc.) can be satisfactorily improved.

FIG. 4 is a ternary composition diagram showing a region V of the refrigerant composition according to Embodiment 1. As shown in FIG. 4, as another example, a more desirable region in the constitution region is the region V located at the point C side when the region S is divided into two regions by a line segment MN connecting a point M (0.0, 20.0, 80.0) and a point N (60.0, 40.0, 0.0). For example, in the region V, a difference between a temperature (discharge temperature) of the refrigerant composition immediately after the refrigerant composition is discharged from a refrigerant compressor and the discharge temperature of R410 can be set to 5K or less.

When the sum of the trifluoroethylene, the difluoromethane, and the propane is 100 mass %, the mass percentage of the difluoromethane is less than 44.4 mass % as one example as long as the constitution of the refrigerant composition is within the constitution region. Thus, the GWP of the refrigerant composition can be suppressed to a value of less than 300.

In a first modified example of the present embodiment, when the sum of the trifluoroethylene, the difluoromethane, and the propane is 100 mass %, the mass percentage of the difluoromethane is less than 29.6 mass %. Thus, the GWP of the refrigerant composition can be suppressed to a value of less than 200. Moreover, in a second modified example of the present embodiment, the mass percentage of the difluoromethane is less than 22.2 mass %. Thus, the GWP of the refrigerant composition can be suppressed to a value of less than 150.

For example, as another component included in the refrigeration cycle working medium, a compound which can suppress a disproportionation reaction and is other than saturated hydrocarbon including two to five carbon atoms can be used together. One example of such disproportionation inhibitor is halomethane (halogenated methane) having a structure represented by Formula 1 below.

**Formula 1** CHmXn

In Formula 1, X denotes a halogen atom selected from the group consisting of fluorine (F), chlorine (Cl), bromine (Br), and iodine (I), m is an integer of zero or more, and n is an integer of one or more. The sum of n and m is four. When n is two or more, X denotes halogen atoms that are the same in type as or different in type from each other.

Specifically, for example, such halomethane includes at least one of (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), fluoroiodomethane (CHFI₂), difluorodiiodomethane (CF₂I₂), dibromodifluoromethane (CBr₂F₂), and trifluoroiodomethane (CF₃I). However, the present embodiment is not limited to these. In the refrigerant composition of the present embodiment, the halomethane is not an essential component but is suitably added according to need.

The refrigeration cycle working medium may include, for example, the above halomethane as the disproportionation inhibitor that suppresses the disproportionation reaction of the trifluoroethylene (HFO-1123). For example, the disproportionation reaction includes: a self-decomposition reaction in which trifluoroethylene (HFO-1123) molecules are decomposed; and a polymerization reaction in which carbons generated by the self-decomposition reaction polymerize to become soot. The amount of disproportionation inhibitor included in the refrigeration cycle working medium can be suitably set.

The refrigeration cycle working medium is used in the refrigeration cycle system. For example, the refrigeration cycle working medium can be used together with lubricating oil (freezer oil) that lubricates a compressor included in the refrigeration cycle system. When the refrigeration cycle working medium is used together with the lubricating oil, a working medium-containing composition is constituted by the refrigerant composition, the disproportionation inhibitor, the lubricating oil component, and another component added according to need. In the working medium-containing composition, the disproportionation inhibitor may be mixed with the refrigeration cycle working medium or may be mixed with the lubricating oil component.

Examples of the lubricating oil include various types of known lubricating oil utilized in the refrigeration cycle system. Specifically, the lubricating oil may include at least one of ester lubricating oil, ether lubricating oil, glycol lubricating oil, alkylbenzene lubricating oil, fluorine lubricating oil, mineral oil, hydrocarbon synthetic oil, and the like. The amount of lubricating oil included in the refrigeration cycle working medium can be suitably set. As one example, the amount of lubricating oil included in the refrigeration cycle working medium is a value within a range of 0 mass % or more and 300 mass % or less.

Moreover, as the other components, the refrigeration cycle working medium may include various types of known additives other than the disproportionation inhibitor. Specifically, the additive may include at least one of an antioxidant, a moisture scavenger, a metal deactivator, an abrasion preventing agent, an antifoaming agent, an ultraviolet fluorescent dye, a stabilizing agent, a polymerization inhibitor, a tracer, and the like. However, the present embodiment is not limited to this.

The antioxidant improves the heat stability, oxidation resistance, chemical stability, and the like of the refrigerant composition or the lubricating oil. For example, the moisture scavenger suppresses a property change of the lubricating oil by removing moisture having entered the refrigeration cycle system. The metal deactivator suppresses or prevents a chemical reaction caused by catalysis of a metal component in the refrigerant cycle system. The abrasion preventing agent reduces the abrasion of a slide portion and the like in the compressor of the refrigeration cycle system. The antifoaming agent suppresses, for example, the generation of bubbles in the lubricating oil. Various additives may be used as long as the use of the additive does not impair the characteristics of the refrigeration cycle working medium or the characteristics of the working medium-containing composition including the refrigeration cycle working medium.

In a process in which each of the refrigerant composition, the refrigeration cycle working medium including the refrigerant composition, and the working medium-containing composition according to the present embodiment configured as above circulates in a freezing circuit in the refrigeration cycle system, each of the refrigerant composition, the refrigeration cycle working medium, and the working medium-containing composition can efficiently cool the target object by energy given from an outside while suppressing the influence on global warming.

### Refrigeration Cycle System

The following will describe the refrigeration cycle system using the refrigeration cycle working medium of the present embodiment. A specific configuration and use of the refrigeration cycle system are not especially limited. For example, the refrigeration cycle system is configured such that components, such as a compressor, a condenser, an expander, and a vaporizer, are connected to each other by pipes. Examples of the refrigeration cycle system include: air conditioning equipment (air conditioners); refrigerators (home-use refrigerators and business-use refrigerators); dehumidifiers; showcases; ice makers; heat pump water heaters; heat pump washing/drying machines; and vending machines. However, the present embodiment is not limited to these.

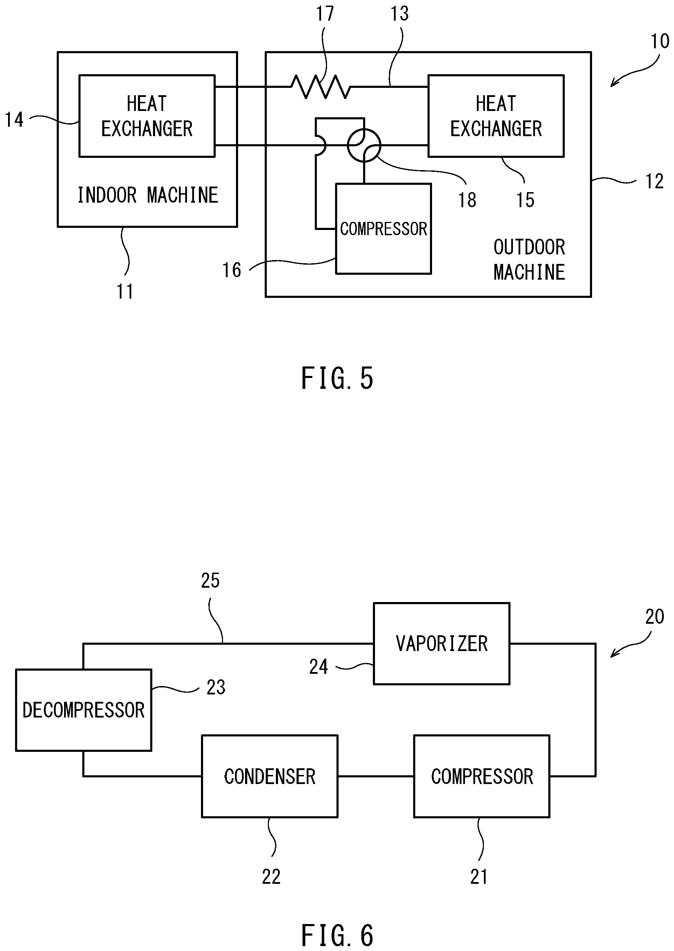

FIG. 5 is a block diagram of a refrigeration cycle system 10 according to Embodiment 1. One example of the refrigeration cycle system 10 is air conditioning equipment. As shown in FIG. 5, the refrigeration cycle system 10 includes an indoor machine 11, an outdoor machine 12, and a pipe 13 connecting the indoor machine 11 and the outdoor machine 12. The indoor machine 11 includes an indoor heat exchanger 14. The outdoor machine 12 includes an outdoor heat exchanger 15, a compressor 16, and a decompressor 17.

The indoor heat exchanger 14 and the outdoor heat exchanger 15 are connected to each other by the pipe 13. As a specific configuration, the indoor heat exchanger 14, the compressor 16, the outdoor heat exchanger 15, and the decompressor 17 are connected to each other in this order in an annular shape by the pipe 13, and the refrigeration cycle working medium circulates through these. Moreover, a four-way valve 18 for switching cooling and heating is located at a portion of the pipe 13 that connects the indoor heat exchanger 14, the compressor 16, and the outdoor heat exchanger 15. The indoor machine 11 further includes a fan, a temperature sensor, an operation part, and the like. The outdoor machine 12 further includes a blower, an accumulator, and the like. In addition to the four-way valve 18, various valve devices, strainers, and the like are located at portions of the pipe 13 according to need.

The indoor heat exchanger 14 performs heat exchange between indoor air introduced into the indoor machine 11 by the fan and the refrigeration cycle working medium flowing inside the indoor heat exchanger 14. At the time of the heating, the indoor machine 11 supplies the air having been warmed by the heat exchange, into a room. At the time of the cooling, the indoor machine 11 supplies the air having been cooled by the heat exchange, into the room. The refrigeration cycle working medium having passed through the indoor heat exchanger 14 is supplied to the outdoor heat exchanger 15. The outdoor heat exchanger 15 performs heat exchange between outside air introduced into the outdoor machine 12 by the blower and the refrigeration cycle working medium flowing inside the outdoor heat exchanger 15. The refrigeration cycle working medium having passed through the outdoor heat exchanger 15 is supplied to the indoor heat exchanger 14 again.

Specific configurations of the indoor machine 11 and the outdoor machine 12 and specific configurations of the indoor heat exchanger 14, the outdoor heat exchanger 15, the compressor 16, the decompressor 17, the four-way valve 18, the fan, the temperature sensor, the operation part, the blower, the accumulator, the valve device, the strainer, and the like are not especially limited.

At the time of the cooling operation or dehumidifying operation of the refrigeration cycle system 10 that is the air conditioning equipment, the compressor 16 of the outdoor machine 12 compresses the gasified refrigeration cycle working medium and discharges the gasified refrigeration cycle working medium to the pipe 13. The gasified refrigeration cycle working medium is supplied to the outdoor heat exchanger 15 through the four-way valve 18. The outdoor heat exchanger 15 performs heat exchange between the gasified refrigeration cycle working medium and outside air. By this heat exchange, the refrigeration cycle working medium is condensed and liquefied. The liquefied refrigeration cycle working medium flows through the pipe 13, is decompressed by the decompressor 17, and is supplied to the indoor heat exchanger 14. The indoor heat exchanger 14 performs heat exchange between the liquefied refrigeration cycle working medium and indoor air. By this heat exchange, the refrigeration cycle working medium is vaporized and gasified. The gasified refrigeration cycle working medium flows through the pipe 13 and returns to the compressor 16 through the four-way valve 18.

Moreover, at the time of the heating operation of the refrigeration cycle system 10 that is the air conditioning equipment, the compressor 16 of the outdoor machine 12 compresses the gasified refrigeration cycle working medium and discharges the gasified refrigeration cycle working medium to the pipe 13. The gasified refrigeration cycle working medium is supplied to the indoor heat exchanger 14 through the four-way valve 18. The indoor heat exchanger 14 performs heat exchange between the gasified refrigeration cycle working medium and indoor air. By this heat exchange, the refrigeration cycle working medium is condensed and liquefied. The liquefied refrigeration cycle working medium flows through the pipe 13, is decompressed by the decompressor 17 to become a gas phase and a liquid phase, and is supplied to the outdoor heat exchanger 15. The outdoor heat exchanger 15 performs heat exchange between the refrigeration cycle working medium of the gas and liquid phases and outside air. By this heat exchange, the refrigeration cycle working medium of the gas and liquid phases is vaporized and gasified. The gasified refrigeration cycle working medium flows through the pipe 13 and returns to the compressor 16 through the four-way valve 18.

The refrigeration cycle system 10 that operates as above includes the above-described refrigeration cycle working medium. The refrigeration cycle working medium includes the refrigerant composition of the present embodiment. Thus, in the present embodiment, the refrigeration cycle system 10 that can efficiently freezes the target object while suppressing the influence on global warming can be realized by using the refrigerant composition that excels in the GWP and the COP. Hereinafter, in Embodiment 2, differences from Embodiment 1 will be mainly described.

### Embodiment 2

FIG. 6 is a block diagram of a refrigeration cycle system 20 according to Embodiment 2. One example of the refrigeration cycle system 20 of the present embodiment is a refrigerator. As shown in FIG. 6, the refrigeration cycle system 20 includes a compressor 21, a condenser 22, a decompressor 23, a vaporizer 24, a pipe 25 connecting these, and the like. Moreover, the refrigeration cycle system 20 includes a casing not shown, a blower, an operation part, a control part, and the like. The refrigeration cycle system 20 includes the refrigeration cycle working medium of Embodiment 1.

The compressor 21 compresses the refrigeration cycle working medium to generate the high-temperature high-pressure gasified refrigeration cycle working medium. The condenser 22 cools the gasified refrigeration cycle working medium to liquefy the gasified refrigeration cycle working medium. The decompressor 23 decompresses the liquefied refrigeration cycle working medium. The decompressor 23 includes, for example, a capillary tube. The vaporizer 24 vaporizes the refrigeration cycle working medium to generate the low-temperature low-pressure gasified refrigeration cycle working medium. The compressor 21, the condenser 22, the decompressor 23, and the vaporizer 24 are connected to each other in this order in an annular shape by the pipe 25, and the refrigeration cycle working medium circulates through these. Specific configurations of the compressor 21, the condenser 22, the decompressor 23, the vaporizer 24, the pipe 25, the main body casing, the blower, the operation part, the control part, and the like are not especially limited.

When the refrigeration cycle system 20 that is the refrigerator drives, the compressor 21 compresses the gasified refrigeration cycle working medium and discharges the gasified refrigeration cycle working medium to the condenser 22. The condenser 22 cools the gasified refrigeration cycle working medium to generate the liquefied refrigeration cycle working medium. The liquefied refrigeration cycle working medium is decompressed by the decompressor 23 and is supplied to the vaporizer 24. In the vaporizer 24, the liquefied refrigeration cycle working medium is gasified by taking heat from surroundings. The gasified refrigeration cycle working medium returns to the compressor 21. The refrigeration cycle system 20 can obtain the same effects as the refrigeration cycle system 10.

### Confirmation Test

Next, a confirmation test that confirms the performance of the refrigerant composition of the present disclosure will be described. However, the present disclosure is not limited to Examples below. A skilled person can make various changes, corrections, and modifications within the scope of the present disclosure.

As shown in Table 1 below, the refrigerant compositions according to Examples 1 to 5 were prepared. The sum of the trifluoroethylene, the difluoromethane, and the propane was 100 mass %, and each of the refrigerant compositions according to Examples 1 to 5 included predetermined mass percentages (%) of the trifluoroethylene, the difluoromethane, and the propane. Moreover, as shown in Table 2 below, the refrigerant compositions according to Comparative Examples 1 to 5 were prepared. The sum of the trifluoroethylene, the difluoromethane, and the propane was 100 mass %, each of the refrigerant compositions according to Comparative Examples 1 to 5 included predetermined mass percentages (%) of the trifluoroethylene, the difluoromethane, and the propane. As relative values when the COP of R410A is regarded as 100%, the COPs of the refrigerant compositions according to Examples 1 to 5 and Comparative Examples 1 to 5 were calculated based on physical property data of "REFPROP Ver. 10" that is refrigerant thermophysical property database software created by National Institute of Standards and Technology (NIST). Calculation conditions at this time were as below.
Vaporization temperature: 5°C
Condensation temperature: 45°C
Degree of superheating: 3K
Degree of supercooling: 5K

Calculation results based on the above calculation conditions are shown in Tables 1 and 2.

**Table 1**

| | | Example 1 (near point D in constitution region) | Example 2 (near point F in constitution region) | Example 3 (near point E in constitution region) | Example 4 (near point E in constitution region) | Example 5 (near point E in constitution region) |
|---|---|---|---|---|---|---|
| Mass Percentage (%) | flFOI 123 | 74 | 91 | 62 | 61 | 61 |
| | R32 | 0 | 0 | 15 | 15 | 14 |
| | R290 | 26 | 9 | 23 | 24 | 25 |
| COP (%) relative to R410 | | 92.5 | 92.5 | 92.5 | 92.5 | 92.5 |

**Table 2**

| | | Comparative Example 1 (point D) | Comparative Example 2 (point E) | Comparative Example 3 (point F) | Comparative Example 4 (intermediate point on straight line between points D and F outside constitution region) | Comparative Example 5 (intermediate point of points D, E, and F outside constitution region) |
|---|---|---|---|---|---|---|
| Mass Percentage (%) | HFO1123 | 75 | 62 | 90 | 82 | 75 |
| | R32 | 0 | 14 | 0 | 0 | 5 |
| | R290 | 25 | 24 | 10 | 18 | 20 |
| COP (%) relative to R410 | | Less than 92.5 | Less than 92.5 | Less than 92.5 | 92.2 | 92.2 |

As shown in Table 1, it is confirmed that each of the COPs of the refrigerant compositions according to Examples 1 to 5 each of which has the constitution within the constitution region in the ternary composition diagram of FIG. 1 is 92.5% of the COP of R410A. On the other hand, as shown in Table 2, it is confirmed that the COPs of the refrigerant compositions according to Comparative Examples 1 to 5 each of which has the constitution outside the constitution region are inferior to those of Examples 1 to 5.

### Constitution Examples

Next, Table 3 shows constitution examples on the line segment DE (except for the points D and E) in the constitution region in which the COP of the refrigerant composition of the present disclosure becomes 92.5% of the COP of R410A.

**Table 3**

| **Constitution Examples of Refrigerant Compositions on Line Segment DE (Except for Points D and E) Which can Realize 92.5% of COP of R410** | | | | | | | | | | | | | | |
|---|---|---|---|---|---|---|---|---|---|---|---|---|---|---|
| Mass Percentage (%) | HFO | 7400 | 73.00 | 72.00 | 71.00 | 7000 | 69.00 | 68.00 | 67.00 | 66.00 | 65.00 | 64.00 | 63.00 | 6200 |
| | 1123 | | | | | | | | | | | | | |
| | R32 | 0.44 | 1.26 | 2.08 | 2.94 | 3.82 | 4.73 | 5.66 | 6.63 | 7.64 | 8.72 | 9.87 | 11.21 | 12.83 |
| | R290 | 25.56 | 25.74 | 25.92 | 26.06 | 26.18 | 26.27 | 26.34 | 26.37 | 26.36 | 26.28 | 26.13 | 25.79 | 25.17 |

Moreover, Table 4 shows constitution examples on the line segment EG (except for the points E and G) in the constitution region in which the COP of the refrigerant composition of the present disclosure is 92.5% of the COP of R410A.

**Table 4**

| **Constitution Examples of Refrigerant Compositions on Line Segment EG (Except for Points E and G) Which can Realize 92.5% of COP of R410** | | | | | | | | | | | | | | |
|---|---|---|---|---|---|---|---|---|---|---|---|---|---|---|
| Mass Percentage (%) | HFO1123 | 87.27 | 83.48 | 80.28 | 77.47 | 74.96 | 72.70 | 70.66 | 68.82 | 67.18 | 65.72 | 64.46 | 63.39 | 62.54 |
| | R32 | 2.73 | 5.52 | 7.72 | 9.53 | 11.04 | 12.30 | 13.34 | 14.18 | 14.82 | 15.28 | 15.54 | 15.61 | 15.46 |
| | R290 | 10.00 | 11.00 | 12.00 | 13.00 | 14.00 | 15.00 | 16.00 | 17.00 | 18.00 | 19.00 | 2000 | 21.00 | 2200 |

The present disclosure is not limited to the above embodiments. Modifications, additions, and eliminations may be made with respect to the configurations of the embodiments within the scope of the present disclosure.

### Reference Signs List

- 10: air conditioning equipment (refrigeration cycle system)
- 20: refrigerator (refrigeration cycle system)

## Claims

1. A refrigerant composition comprising:
trifluoroethylene (HFO-1123);
difluoromethane (R32); and
propane (R290), wherein:
when mass percentages of the trifluoroethylene, the difluoromethane, and the propane based on a sum of the trifluoroethylene, the difluoromethane, and the propane are respectively represented by x, y, and z, in a ternary composition diagram in which the sum of the trifluoroethylene, the difluoromethane, and the propane is 100 mass %, there are a point A (100.0, 0.0, 0.0), a point B (0.0, 100.0, 0.0), a point C (0.0, 0.0, 100.0), a point D (74.5, 0.0, 25.5), a point E (62.0, 12.4, 25.6), a point F (91.2, 0.0, 8.8), a point G (86.9, 3.1, 10.0), and a point H (0.0, 90.0, 10.0), and a point of coordinates (x, y, z) is within a range of a figure surrounded by a line segment GH connecting the points G and H, a line segment HC connecting the points H and C, a line segment CD connecting the points C and D, a line segment DE connecting the points D and E, and a line segment EG connecting the points E and G or is on at least one of the line segments DE, EG, and GH (except for the points D, E, and G);
the line segment DE is represented by coordinates (x, 0.0266x²-4.6248x+196.8859, -0.0266x²+3.6248x-96.8859);
a line segment EF connecting the points E and F is represented by coordinates (0.1171z²-5.7627z+132.8115, -0.1171z²+4.7627z-32.8115, z); and
the line segments GH, HC, and CD are straight lines.

2. The refrigerant composition according to claim 1, further comprising halomethane.

3. The refrigerant composition according to claim 1 or 2, wherein when the sum of the trifluoroethylene, the difluoromethane, and the propane is 100 mass %, a mass percentage of the difluoromethane is less than 44.4 mass %.

4. The refrigerant composition according to claim 3, wherein the mass percentage of the difluoromethane is less than 29.6 mass %.

5. The refrigerant composition according to claim 4, wherein the mass percentage of the difluoromethane is less than 22.2 mass %.

6. A refrigeration cycle working medium comprising the refrigerant composition according to any one of claims 1 to 5.

7. A refrigeration cycle system comprising the refrigeration cycle working medium according to claim 6.
